# FASCICULE DE BREVET EUROPEEN

(11) **EP 0 772 000 B1**
(45) Date de publication et mention de la délivrance du brevet: **12.01.2000**
(21) Numéro de dépôt: 96402058.0
(22) Date de dépôt: 26.09.1996
(51) Int. Cl.: F22B 37/78, F22B 1/28, G01F 23/24

(54) **Générateur de vapeur à approvisionnement automatique et procédé de mesure du niveau de liquide dans un tel générateur**
Dampferzeuger mit automatischer Speisung und Verfahren zur Messung eines Flüssigkeitsniveaus in einem derartigen Dampferzeuger
Steam generator with automatic feeding and process for measuring liquid level in such a steam generator

(30) Priorité: 31.10.1995 FR 9512870
(43) Date de publication de la demande: 07.05.1997
(73) Titulaire: SEB S.A., 69130 Ecully (FR)
(72) Inventeur: Debourg, Jean-Pierre, 69008 Lyon (FR); Daulasim, Denis, 69100 Villeurbanne (FR)
(74) Mandataire: Michelet, Alain

(56) Documents cités:
- GB-A- 2 168 154
- US-A- 2 627 015
- US-A- 3 813 629
- SIEMENS ZEITSCHRIFT, vol. 42, no. 9, Septembre 1968, ERLANGEN DE, pages 746-748, XP002005917 K. PFISTER ET H. RAMSAUER: "Elektrothermischer Niveauwächter"

## Description

La présente invention concerne un générateur de vapeur à approvisionnement automatique et un procédé de mesure du niveau de liquide dans un tel générateur. Elle s'applique en particulier à des appareils électroménagers, tels que des systèmes de repassage utilisant de la vapeur d'eau. Elle peut également être utilisée, par exemple, pour des chaudières de production de vapeur.

Un générateur de vapeur est destiné à vaporiser un liquide par chauffage, afin de produire de la vapeur pouvant être prélevée. Dans les générateurs de vapeur à approvisionnement automatique, les réserves de liquide sont réapprovisionnées, à partir d'une source d'approvisionnement, dans la cuve réservoir de vaporisation. Pour qu'un ajustement automatique de ces réserves puisse avoir lieu, il est avantageux de fixer un niveau de seuil du liquide disponible dans la cuve pour la vaporisation. Ainsi, lorsque le niveau effectif est inférieur à ce seuil, on commande automatiquement une arrivée de liquide, et lorsqu'il est supérieur, on interrompt cette arrivée.

Pour que ce dispositif soit fiable, il est nécessaire de connaître de façon précise la valeur du niveau du liquide contenu dans la cuve du générateur de vapeur. Pour ce faire, divers types de capteurs sont utilisés de façon connue, tirant parti de différences entre des propriétés physiques du liquide et de la vapeur associée. De nombreuses réalisations sont ainsi fondées sur des différences de densité, d'indice de réfraction, ou de transmission acoustique, entre autres.

Un système connu fondé sur des différences de dissipation thermique est particulièrement intéressant pour son coût peu élevé. Il consiste à chauffer à une puissance connue une zone située au niveau de seuil choisi à l'intérieur de la cuve, et à mesurer la température de cette zone chauffée. Pour une même puissance dissipée, la température d'équilibre atteinte est plus élevée lorsque le capteur est dans le gaz que lorsqu'il est dans le liquide, typiquement d'une dizaine de degrés. En comparant la température mesurée à une température de référence, il est donc possible de déterminer dans quel milieu se trouve le capteur, et d'en déduire si le liquide atteint ou non le niveau de seuil.

Un tel capteur est par exemple décrit dans le document GB-A-2.168.154. Il comprend une sonde chauffée disposée dans un réservoir de liquide et associée à un détecteur de température, dont la sortie sert à initier des systèmes de commande et/ou d'alarme.

Un autre capteur est décrit dans la demande de brevet européen EP-A-585.177. Ce document concerne un détecteur de présence de liquide utilisable pour mesurer le niveau d'un carburant dans un réservoir. Le détecteur comprend une sonde contenant une thermistance à coefficient de température négatif en série avec une thermistance à coefficient de température positif ayant une variation progressive de sa résistance en fonction de la température. Une résistance peut dissiper une puissance électrique par effet Joule dans le détecteur. Le détecteur comporte également des moyens pour comparer à un seuil déterminé la valeur de la résistance totale des thermistances.

Cette valeur est respectivement supérieure ou inférieure au seuil en l'absence ou en présence de liquide au niveau de la sonde, dans une plage de température donnée.

Les systèmes thermiques précédemment exposés sont fiables pour détecter le niveau d'un liquide lorsque l'équilibre gaz-liquide ne change pas, par exemple pour un réservoir à l'air libre. Par contre, ils s'avèrent difficilement exploitables dans un générateur de vapeur, avec prélèvement de vapeur. En effet, un tel prélèvement change le régime d'équilibre entre le liquide et sa vapeur sous pression, ce qui entraîne une ébullition et un abaissement de pression et de température du liquide. De ce fait, on constate une baisse de température de la zone chauffée à puissance constante, que cette zone soit en contact avec le liquide en ébullition ou avec la vapeur formée au-dessus. Cette insuffisance de différenciation est due à la baisse de pression et à des mouvements convectifs dans la vapeur, augmentant les échanges de cette dernière avec la zone chauffée et par conséquent les phénomènes de dissipation thermique.

La capacité de distinction se trouve encore atténuée dans un appareil de volume assez réduit, car des projections dues à l'ébullition mouillent le capteur.

De plus, le chauffage de la zone située au niveau de seuil et la mesure de température étant généralement effectués au moyen de composants électromécaniques, l'incertitude de différentiation est aggravée par l'imprécision de ces composants et de la tension d'alimentation du circuit.

Les capteurs thermiques habituellement utilisés fournissent donc des signaux indifférenciés dans un générateur de vapeur en fonctionnement, selon que ces capteurs sont en présence de liquide ou de vapeur au-dessus d'un liquide bouillant.

D'autre part, dans un générateur à température de fonctionnement élevée par rapport à la température ambiante, la montée en température de la zone chauffée en milieu gazeux est lente lors d'un prélèvement de vapeur. Ce handicap est particulièrement pénalisant dans des appareils à usage intermittent, tels que des systèmes de repassage.

L'invention a pour but de remédier à ces inconvénients, et de proposer en particulier un générateur de vapeur à approvisionnement automatique comportant un capteur thermique dont l'indication ne dépend pas du régime de prélèvement.

L'invention a ainsi pour objectif un générateur de vapeur muni d'un capteur capable de différencier clairement la présence d'un liquide ou d'un gaz, en toute circonstance.

L'invention vise également un générateur de vapeur comprenant un capteur thermique apte à atteindre rapidement la température du liquide ou du gaz en contact avec lui.

L'invention a aussi pour but un générateur de vapeur équipé d'un système simple et peu coûteux permettant d'ajuster précisément le niveau de liquide dans la cuve du générateur afin d'effectuer des prélèvements de vapeur.

Un autre objectif de l'invention est un procédé de mesure d'un niveau de liquide dans la cuve d'un générateur de vapeur à approvisionnement automatique, permettant de déterminer de façon fiable si le niveau de liquide atteint un niveau de seuil prédéterminé, y compris lors d'un prélèvement de vapeur.

A cet effet, l'invention s'applique à un générateur de vapeur à approvisionnement automatique comprenant:
- un bouilleur comportant une cuve destinée à contenir un liquide, au moins un élément de chauffage de la cuve, capable de vaporiser le liquide, et des moyens de prélèvement de vapeur dans la cuve,
- un dispositif d'approvisionnement de la cuve en liquide,
- un capteur de niveau mesurant le niveau du liquide dans la cuve, et étant disposé en une zone de la cuve située à un niveau de seuil fixé, ce capteur comprenant des moyens de chauffage, capables de chauffer cette zone et des moyens de mesure mesurant la température en cette zone et la comparant à une température de référence, de façon à établir si le liquide atteint le niveau de seuil,
- une commande d'approvisionnement contrôlée par le capteur de niveau et agissant sur le dispositif d'approvisionnement, approvisionnant automatiquement la cuve en liquide lorsque le niveau du liquide est inférieur au niveau de seuil et bloquant l'approvisionnement lorsque le niveau du liquide est supérieur ou égal au niveau de seuil.

Selon l'invention, le générateur comporte des moyens d'ajustement agissant en fonction du prélèvement de vapeur, d'une plage de variation de la température de la zone variant en fonction du niveau du liquide et/ou de la température de référence, de sorte que cette température de référence soit à l'intérieur de la plage de variation.

Les moyens d'ajustement agissent soit sur la puissance de chauffage du capteur, soit sur la température de référence, par augmentation de la puissance de chauffage ou baisse de la température de référence, quand il y a prélèvement de vapeur.

Le prélèvement de vapeur est détecté, soit directement par la commande de prélèvement, soit par la variation de pression, soit par la variation de température du liquide.

A l'équilibre, pour une température donnée du liquide correspondant à une pression donnée de la vapeur formée au-dessus, la plage de variation est stable pour une puissance de chauffage fixée. Lorsque le capteur est dans le liquide, ses moyens de mesure détectent une température inférieure qui est supérieure ou égale à celle du liquide en dehors de la zone du capteur. Lorsque le capteur est dans la vapeur, la température détectée est une température supérieure à la précédente, par exemple d'une dizaine de degrés. La température de référence est alors naturellement choisie dans la plage de transition de température comprise entre la température inférieure et la température supérieure.

Cependant, lors d'un prélèvement de vapeur, cette plage de transition de température est modifiée: elle a tendance à la fois à s'abaisser vers des températures plus faibles, et à rétrécir. L'invention est originale en ce que la température de référence est maintenue dans la plage de transition de température, qui est la plage de variation.

L'invention fournit ainsi des signaux exploitables, notamment lorsque le liquide est en ébullition, et non plus seulement lors d'un équilibre stable entre le liquide et le gaz.

Dans un premier mode de réalisation du générateur selon l'invention, les moyens d'ajustement comprennent des moyens de commande de la puissance de chauffage dissipée par les moyens de chauffage, capables d'augmenter ladite puissance de chauffage lors d'un prélèvement de vapeur et de la diminuer en l'absence d'un tel prélèvement.

Grâce à cet échauffement, l'abaissement de la plage de transition de température est au moins partiellement compensé par l'augmentation de la puissance de chauffage.

Dans une première forme préférée de ce premier mode de réalisation, les moyens de prélèvement de vapeur comprenant une commande de prélèvement, les moyens de commande de la puissance de chauffage sont actionnés par la commande de prélèvement, et donnent à la puissance de chauffage une première valeur basse ou une seconde valeur élevée, selon que la commande de prélèvement est en position de non prélèvement ou de prélèvement.

Cette réalisation est particulièrement simple, puisque l'augmentation de la puissance de chauffage résulte d'une simple action mécanique. De plus, en donnant à la puissance de chauffage une valeur basse en l'absence de prélèvement de vapeur, on limite l'usure du capteur et on évite de dissiper inutilement de l'énergie lorsque cela n'est pas nécessaire.

Dans cette première forme du premier mode de réalisation, les moyens de chauffage du capteur de niveau comportent avantageusement au moins une résistance de chauffage et les moyens de commande comprennent avantageusement:
- une diode à jonction en série avec la résistance de chauffage,
- un générateur électrique aux bornes de l'ensemble comprenant la diode et la résistance de chauffage, capable d'alimenter la résistance de chauffage,
- un interrupteur en parallèle avec la diode, actionné par l'organe de prélèvement, cet interrupteur étant ouvert en l'absence de prélèvement de vapeur et fermé en présence d'un tel prélèvement, de telle sorte que la valeur élevée est le double de la valeur basse.

Ce doublement de la puissance de chauffage pendant le prélèvement de vapeur convient bien, même si ce rapport n'est pas optimisé.

Le générateur électrique peut en particulier consister en une alimentation par le secteur.

Dans une deuxième forme préférée du premier mode de réalisation du générateur selon l'invention, le générateur comporte un capteur de pression apte à mesurer la pression de la vapeur dans la cuve et à transmettre aux moyens de commande de puissance un signal dépendant de la pression. Ces moyens de commande produisent une puissance de chauffage qui est une fonction décroissante de la pression.

La plage de transition de température est ainsi approximativement conservée à sa position d'équilibre, grâce à un ajustement continu.

Dans une troisième forme préférée du premier mode de réalisation du générateur selon l'invention, le générateur comporte un capteur auxiliaire de température disposé dans le liquide apte à mesurer la température du liquide et à transmettre aux moyens de commande de température un signal dépendant de la température du liquide. Ces moyens de commande produisent une puissance de chauffage qui est une fonction décroissante de la température du liquide.

Selon un deuxième mode de réalisation préféré du générateur de vapeur selon l'invention, les moyens d'ajustement comprennent des moyens de commande de la température de référence, capables de diminuer cette température de référence lors d'un prélèvement de vapeur et de l'augmenter en l'absence d'un tel prélèvement.

Ainsi, au lieu de conserver une température de référence constante et de maintenir la plage de transition de température autour de cette température de référence, on impose à la température de référence de suivre les variations de la plage de transition.

Dans une première forme de réalisation préférée de ce second mode de réalisation, le générateur comporte un capteur auxiliaire de température disposé dans le liquide, apte à mesurer la température du liquide et à transmettre aux moyens de commande de température un signal dépendant de la température du liquide. Ces moyens de commande produisent une température de référence qui est une fonction croissante de la température du liquide.

Avantageusement, la température de référence est la somme de la température du liquide et d'un seuil de température fixe.

Dans ce dernier cas, au lieu de comparer la température détectée par les moyens de mesure du capteur de niveau à une température de référence fixée, on s'intéresse à l'écart de température entre le capteur de niveau et le capteur auxiliaire de température. C'est cet écart de température qui est comparé au seuil prédéterminé pour commander un éventuel approvisionnement en liquide. On s'affranchit ainsi des variations de pression dans la vapeur, ce qui permet de se contenter d'un unique régime de chauffage.

Dans une seconde forme préférée de ce second mode de réalisation, le générateur comporte un capteur de pression apte à mesurer la pression de la vapeur dans la cuve et à transmettre aux moyens de commande de température un signal dépendant de la pression. Ces moyens de commande produisent une température de référence qui est une fonction croissance de la température du liquide.

Préférentiellement, le générateur de vapeur selon l'invention comporte des moyens de coupure de puissance reliés aux moyens de chauffage du capteur, imposant à la puissance de chauffage d'être nulle lors de tout approvisionnement en liquide.

Le capteur de niveau dispose ainsi de deux régimes de fonctionnement: un premier correspondant au maintien de la température de référence dans la plage de transition de température, et le second à la coupure de la puissance de chauffage lors d'un approvisionnement en liquide. Ce second régime de fonctionnement l'emporte sur le premier, la puissance de chauffage étant systématiquement nulle lors d'un approvisionnement.

Le bouilleur comporte avantageusement un logement en doigt de gant à l'intérieur de la cuve, fixé au niveau de seuil et prévu pour contenir le capteur de niveau.

Il est alors intéressant que le capteur comporte une substance thermiquement conductrice et électriquement isolante, dans laquelle sont immergés les moyens de mesure et les moyens de chauffage.

L'invention concerne également un procédé de mesure d'un niveau de liquide dans une cuve d'un générateur de vapeur à approvisionnement automatique, le procédé comprenant les étapes suivantes:
- on chauffe à une puissance de chauffage prédéterminée, une zone de la cuve située à un niveau de seuil fixé,
- on mesure la température en cette zone,
- on compare la température mesurée à une température de référence, de façon à établir si le niveau du liquide atteint le niveau de seuil,
- si le niveau du liquide est inférieur au niveau de seuil, on approvisionne la cuve en liquide,
- si le niveau du liquide est supérieur ou égal au niveau de seuil, on bloque l'approvisionnement.

Le procédé est caractérisé en ce qu'on ajuste en fonction du prélèvement de vapeur, une plage de variation de température de la zone variant en fonction du niveau de liquide et/ou la température de référence pour que la température de référence soit à l'intérieur de la plage de variation.

Préférentiellement, lors d'un approvisionnement de la cuve en liquide, on interrompt le chauffage de la zone.

L'invention sera illustrée sans être aucunement limitée par la description qui suit d'un mode particulier de réalisation, en référence aux dessins annexés, dans lesquels:

La Figure 1 montre en coupe longitudinale un générateur de vapeur selon l'invention.

La Figure 2 détaille en coupe longitudinale le capteur du générateur de vapeur de la Figure 1.

La Figure 3 présente un schéma du circuit électronique de commande associé au générateur de vapeur de la Figure 1.

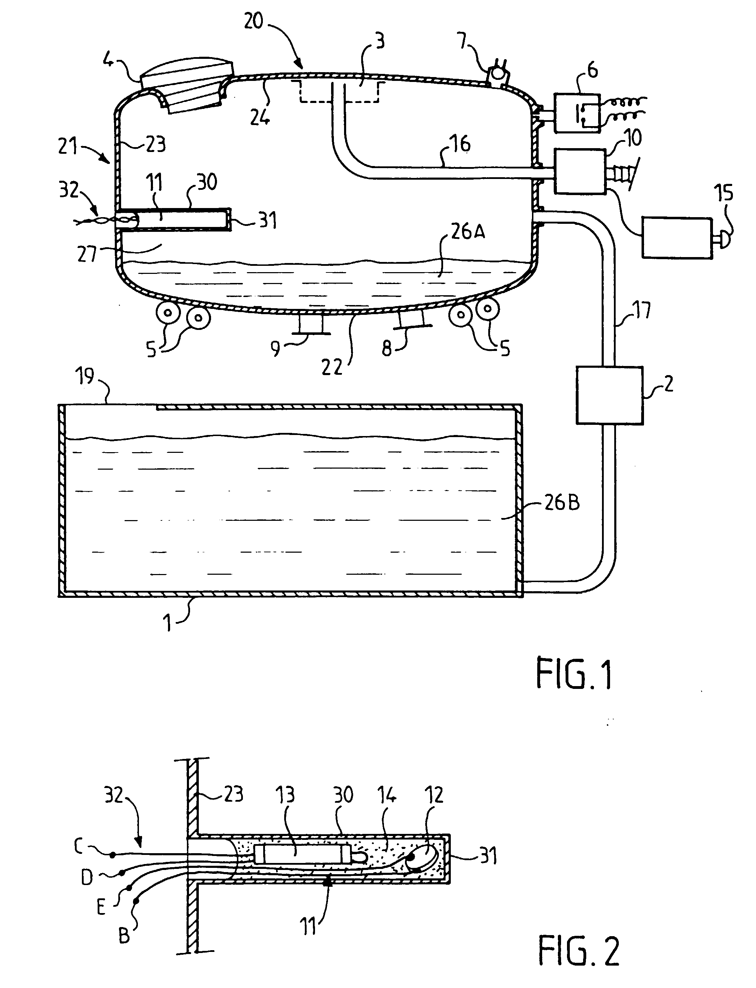

Le générateur de vapeur représenté de manière schématique sur la Figure 1, comporte un bouilleur 20 destiné à recevoir un liquide 26, sous la forme 26A, et à le transformer par chauffage en une vapeur 27 pouvant être prélevée. Le liquide 26 est typiquement de l'eau.

Le bouilleur 20 est relié par un tuyau d'approvisionnement 17 à un réservoir 1 capable d'emmagasiner le liquide 26, sous la forme 26B. Le réservoir 1 dispose d'une ouverture 19 permettant de le remplir. Dans l'exemple particulier choisi, sa capacité de stockage est d'environ un litre, et il est constitué d'acier inoxydable.

Le tuyau d'approvisionnement 17 est équipé d'une commande d'approvisionnement 2 sous forme d'une pompe électromagnétique, permettant de régler précisément l'approvisionnement en liquide 26 du bouilleur 20 par le réservoir 1. Cette commande d'approvisionnement 2 est reliée à un circuit électronique 33 commandant son fonctionnement.

Le bouilleur 20 comprend une cuve 21 comportant un fond 22 et une partie supérieure 24, réunis par une paroi latérale 23. Dans l'exemple, la capacité de cette cuve 21 est d'environ un litre et elle est constituée d'acier inoxydable. La cuve 21 comporte dans sa partie supérieure 24 une valve d'admission d'air 7 qui permet d'introduire à l'intérieur de la cuve 21 de l'air ambiant à la pression atmosphérique entre deux utilisations du générateur. La cuve 21 est également équipée d'un bouchon 4 amovible, ce bouchon 4 pouvant être ôté à des fins de vidange, d'entretien et de nettoyage.

Le bouilleur 20 comprend aussi des éléments chauffants 5 brasés sous le fond 22, ces éléments chauffants 5 consistant en des résistances électriques. Un thermostat 8 et un thermostat de sécurité 9 sont placés sous le fond 22, et servent à assurer que la température du liquide 26 reste constante. Un thermostat 8 placé sous le fond 22 a pour fonction de limiter un échauffement en cas de manque du liquide 26 dans la cuve 21, pouvant être dû à une insuffisance de liquide dans le réservoir 1 ou à une panne de la commande d'approvisionnement 2.

Un thermostat 9 de sécurité est prévu pour agir en cas de défaillance du thermostat 8.

Un pressostat 6 à contact fixé en haut de la paroi latérale 23 permet quant à lui de maintenir la vapeur 27 à une pression constante et le liquide 26 à la température correspondante. Le pressostat 6 et les thermostats 8 et 9 sont reliés aux éléments chauffants 5 et commandent leur fonctionnement.

Le bouilleur 20 comprend également des moyens de prélèvement de la vapeur 27 dans la cuve 21 en vue d'une utilisation extérieure. Ces moyens comportent en particulier un tuyau de prélèvement 16 débouchant dans une zone de prélèvement 3 au voisinage de la partie supérieure 24 de la cuve 21. Le tuyau de prélèvement 16, coudé, traverse la paroi latérale 23 et se prolonge vers l'extérieur jusqu'à un dispositif utilisant la vapeur 27, tel qu'un fer à repasser. Le tuyau de prélèvement 16 est pourvu d'une électrovanne 10 de prélèvement de vapeur reliée à une commande de prélèvement 15. La commande de prélèvement 15 est un organe tel qu'un bouton-poussoir, grâce auquel l'utilisateur peut commander manuellement l'extraction de vapeur.

La paroi latérale 23 de la cuve 21 comporte, du côté opposé à l'arrivée du tuyau d'approvisionnement 17, un renfoncement tubulaire en doigt de gant, dirigé vers l'intérieur de la cuve 21 et constituant un logement 30. Ce logement 30 a une extrémité 31 fermée à l'intérieur de la cuve 21, et est ouvert vers l'extérieur. Sa position détermine un niveau de seuil du liquide 26 dans la cuve 21. Le logement 30 contient un capteur 11 thermique, électriquement alimenté au moyen de fils électriques 32 d'alimentation.

Le capteur 11 disposé dans le logement 30 est détaillé sur la Figure 2. Il comprend une thermistance 12 à coefficient de température positif, ou CTP, placée à proximité immédiate de l'extrémité 31 du logement 30, et destinée à mesurer la température au voisinage de celle-ci. Le capteur 11 comprend également une résistance de chauffage 13 ayant pour fonction de chauffer le logement 30.

La puissance de la résistance de chauffage 13 est choisie suffisamment élevée pour obtenir un échauffement rapide du capteur 11, et suffisamment basse pour éviter de gros bouillonnements autour du logement 30.

Typiquement, la résistance de chauffage 13 a une valeur d'environ 1,5 Ω, de façon à produire approximativement une puissance de chauffage de 35 watts lorsqu'elle est alimentée à une tension alternative de 220 volts. La thermistance 12 et la résistance de chauffage 13 sont électriquement alimentées chacune au moyen de deux des fils électriques 32. Elles sont noyées dans une résine 14 thermiquement conductrice et électriquement isolante.

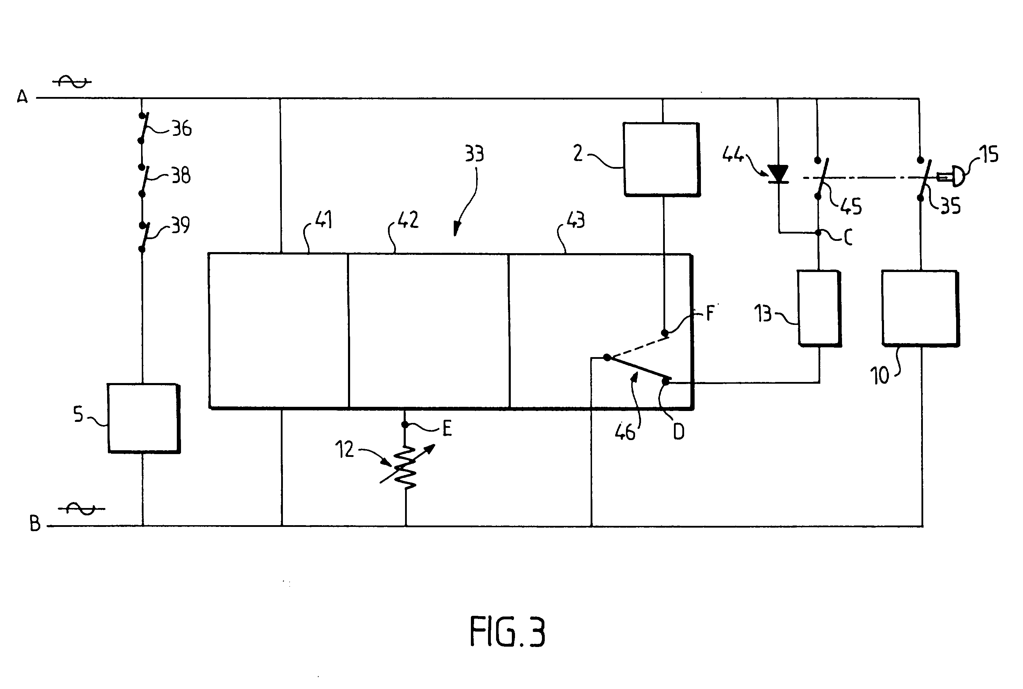

La thermistance 12, la résistance de chauffage 13, la commande d'approvisionnement 2 ainsi que l'électrovanne 10 sont reliées au circuit électronique 33 de commande, schématisé sur la Figure 3.

Dans tout ce qui suit, des points de mêmes potentiels électriques sont désignés par les mêmes références.

Le circuit électronique 33 est relié au secteur, et on désigne par A et B respectivement ses bornes supérieure et inférieure d'alimentation.

L'électrovanne 10 est en série avec un premier interrupteur 35 actionnable par la commande de prélèvement 15.

D'autre part, les éléments chauffants 5 sont en série avec trois interrupteurs 36, 38 et 39 respectivement actionnables par le pressostat 6, le thermostat 8 et le thermostat de sécurité 9.

Le circuit électronique 33 est composé de trois parties 41, 42, 43, schématisées sous forme de blocs sur la Figure 3. Une première partie 41 correspond à l'alimentation du circuit électronique 33, et est reliée aux bornes d'alimentation A et B.

Une deuxième partie 42 comporte une détection de seuil, et est connectée à une première borne E de la thermistance 12, la seconde borne de la thermistance 12 étant la borne inférieure d'alimentation B. Cette deuxième partie 42 est apte à détecter une tension de seuil aux bornes B, E de la thermistance 12, obtenue pour une température de référence, et à produire une amplification associée. Cette dernière permet de différencier la présence du liquide 26 ou de la vapeur 27 au voisinage du logement 30, grâce aux différences de dissipation thermique dans les liquides et dans les gaz.

La troisième partie 43 a une fonction de commutation, et permet d'alimenter soit la résistance de chauffage 13, soit la commande d'approvisionnement 2. Elle comporte notamment un commutateur 46 relié à la borne inférieure d'alimentation B et ayant deux positions possibles.

Dans une première position dite d'approvisionnement, il est en contact avec une première borne F de la commande d'approvisionnement 2, la seconde borne de cette dernière étant la borne supérieure d'alimentation A. Dans la seconde position dite de chauffage, le commutateur 46 est en contact avec une première borne D de la résistance de chauffage 13.

La résistance de chauffage 13 est par sa seconde borne C reliée à un cinquième interrupteur 45, actionnable par la commande de prélèvement 15 et connecté à la borne supérieure d'alimentation A. Une diode à jonction 44 est disposée en parallèle de l'interrupteur 45.

En fonctionnement, le réservoir 1 reçoit au préalable une quantité de liquide 26 destiné à approvisionner le bouilleur 20. Ce liquide 26 est typiquement à la température et à la pression atmosphériques dans le réservoir 1. Initialement, les interrupteurs 35 et 45 sont ouverts et le commutateur 46 est en position de chauffage.

La mise en route du générateur de vapeur provoque l'activation du pressostat 6, qui impose dans l'enceinte de la cuve 21 une pression et une température désirées, en commandant la fermeture de l'interrupteur 36. L'interrupteur 38, généralement fermé, est ouvert par le thermostat 8 en cas de dépassement d'une température maximale. L'interrupteur 39, actionné par le thermostat de sécurité 9, intervient de la même manière en cas de défaillance du thermostat 8. Dans l'exemple de mise en oeuvre présenté, qui concerne un générateur de vapeur d'eau pour fer à repasser, cette pression est d'environ 3 bars. Une fois cette pression atteinte, le pressostat 6 commande l'arrêt des éléments chauffants 5. Le thermostat 8 permet d'éviter un échauffement excessif de la cuve 21, en cas de manque d'eau et d'absence de pression. Dans l'exemple de mise en oeuvre, le liquide 26 étant de l'eau et la pression imposée valant 3 bars, la température est voisine de 144°C.

Dès que le générateur de vapeur est mis en route, le circuit électronique 33 de commande est alimenté par le secteur. La résistance de chauffage 13 reçoit alors un courant redressé en monoalternance de la diode à jonction 44. Elle produit ainsi une puissance de chauffage typiquement de l'ordre de 17 watts. La chaleur dissipée par la résistance de chauffage 13 se dissipe assez peu dans l'air environnant le logement 30, si bien que la température du capteur 11 s'élève rapidement.

La thermistance 12, thermiquement en contact avec la résistance de chauffage 13, voit alors sa résistance augmenter avec sa température.

La tension aux bornes B, E de la thermistance 12 devient rapidement égale à la tension de seuil révélatrice de la présence d'un gaz. La deuxième partie 42 du circuit électronique 33 détecte cette tension de seuil, et provoque dans la troisième partie 43 le passage du commutateur 46 de la position de chauffage à la position d'approvisionnement.

La commande d'approvisionnement 2 permet alors l'approvisionnement en eau, et simultanément, la circulation de courant dans la résistance de chauffage 13 est interrompue.

Le liquide 26 est ainsi aspiré par la pompe électromagnétique 2 à travers le tuyau d'approvisionnement 17 jusqu'à la cuve 21 du bouilleur 20, de telle sorte que la cuve 21 commence à se remplir.

Le liquide 26 emplissant la cuve 21 est partiellement évaporé au moyen des éléments chauffants 5, produisant la vapeur 27. L'ébullition du liquide 26 en l'absence de prélèvement de vapeur est suffisamment faible pour ne pas perturber les mesures effectuées par le capteur 11.

La résistance de chauffage 13 ne créant plus de chaleur lors de l'approvisionnement, la température de la thermistance 12 se refroidit peu à peu par perte naturelle, et devient de nouveau inférieure à la température de référence. La deuxième partie 42 du circuit électronique 33 détecte cette transition et provoque dans la troisième partie 43, le passage du commutateur 46 de la position d'approvisionnement à celle de chauffage.

Il s'ensuit que l'approvisionnement en liquide 26 de la cuve 21 est interrompu, et que simultanément la résistance de chauffage 13 se remet à générer de la chaleur. Le processus précédent se répète alors, la cuve 21 étant ainsi approvisionnée par apports successifs. De cette façon, on évite un remplissage trop brutal, qui ferait baisser la température du bouilleur 20 de façon excessive, et par conséquent baisser la pression.

La régulation de l'approvisionnement en liquide 26 obtenue grâce au circuit électronique 33 restreint la température du capteur 11 à des valeurs proches de la température de référence, ce qui évite de l'endommager.

Le niveau du liquide 26 continue d'augmenter jusqu'à ce que le logement 30 soit au contact avec lui. Le niveau de liquide est alors égal au niveau de seuil. A ce moment, la chaleur émise par la résistance de chauffage 13 est dissipée dans le liquide 26, de telle sorte que la température de la thermistance 12 reste inférieure à la température de référence. Par conséquent, l'approvisionnement cesse, et le niveau de liquide est stabilisé autour du niveau de seuil. A ce stade, le liquide 26 est en équilibre avec sa vapeur 27 dans la cuve 21.

Lors d'un prélèvement de vapeur, l'utilisateur actionne la commande de prélèvement 15. Celle-ci ferme le premier interrupteur 35 et provoque ainsi le passage d'un courant dans l'électrovanne 10 de prélèvement de vapeur, ce qui a pour effet une extraction de la vapeur 27 au moyen du tuyau de prélèvement 16. Simultanément, l'actionnement de la commande de prélèvement 15 ferme l'interrupteur 45, qui court-circuite la diode à jonction 44, de telle sorte que la puissance de chauffage est doublée. Dans l'exemple de mise en oeuvre, elle passe de 17 watts à 35 watts.

L'augmentation sensible de la puissance de chauffage au moment du prélèvement de vapeur permet d'obtenir des signaux exploitables malgré l'ébullition violente du liquide 26.

D'autre part, la puissance de chauffage limitée utilisée en l'absence de prélèvement permet d'éviter d'inutiles surcoûts de consommation.

Surtout, la température de référence employée en l'absence de prélèvement de vapeur 27 continue de fournir un critère valide pour discerner la vapeur 27 du liquide 26. En effet, l'abaissement de la plage de transition de température, dû à la baisse globale de température provoquée par le prélèvement, est compensé au moins partiellement par l'augmentation de la puissance de chauffage. Le doublement de cette puissance s'avère convenir pour maintenir dans la plage de transition la température de référence fixée.

Une fois le prélèvement de vapeur 27 achevé, la commande de prélèvement 15 cesse d'être actionnée, ce qui ouvre simultanément les interrupteurs 35 et 45. L'électrovanne 10 cesse alors d'être activée, et la résistance de chauffage 13 est de nouveau alimentée au travers de la diode à jonction 44.

Le générateur de vapeur à alimentation automatique selon l'invention s'avère ainsi fiable et économique, et peut être utilisé un très grand nombre de fois sans usure ni détérioration.

Dans une première variante du générateur de vapeur de la Figure 1, le pressostat 6 produit un signal fonction de la pression de vapeur 27 dans la cuve 21, et l'ensemble constitué par la diode 44 et l'interrupteur 45 est supprimé.

De plus, le circuit électronique 33 est prévu pour recevoir le signal produit par le pressostat 6 et est apte à modifier le facteur de marche de la résistance en fonction de ce signal, le facteur de marche donc la puissance évoluant comme une fonction décroissante de la pression.

Ainsi, en fonctionnement, la puissance de chauffage augmente automatiquement de façon continue lors d'un prélèvement de vapeur 27, puisque la pression de la vapeur 27 diminue, et revient à une valeur stable inférieure après le prélèvement, la pression retrouvant son niveau supérieur stabilisé.

Dans une deuxième variante, la résistance est remplacée par plusieurs résistances de valeurs fixes. Selon la pression mesurée par le pressostat 6, une ou plusieurs résistances sont alimentées, de façon à obtenir une puissance de chauffage fonction décroissante de la pression. Dans un mode de réalisation avantageux particulièrement simple de cette seconde variante, les résistances sont au nombre de 2.

Au lieu d'être commandée par la pression de la vapeur 27, la puissance peut l'être par la température du liquide 26, celle-ci étant elle aussi représentative de l'abaissement de la plage de température lors d'un prélèvement de vapeur 27. Avantageusement, selon une troisième variante, un capteur auxiliaire thermosensible non chauffé est ainsi disposé à proximité du fond 22 de la cuve 21, et transmet au circuit électronique 33 des signaux dépendant de la température du liquide 26. Le circuit 33 impose à la puissance de chauffage d'être une fonction décroissante de cette température en agissant sur le facteur de marche de la résistance ou sur la commutation de plusieurs résistances.

De façon plus générale, l'invention couvre tout moyen de commande permettant d'augmenter la puissance de chauffage lors d'un prélèvement de vapeur 27 et de la diminuer en l'absence d'un tel prélèvement, de telle sorte que la température de référence reste à l'intérieur de la plage de variation précédemment définie.

Comme cela a été indiqué plus haut, le chauffage de la zone 30 est systématiquement interrompu lors d'un approvisionnement en liquide 26. Ce second régime de fonctionnement du capteur 11 se couple avec le premier, consistant à ajuster la puissance de chauffage selon qu'un prélèvement a lieu ou non. ll prédomine, puisque le chauffage de la zone 30 est systématiquement interrompu lors d'un approvisionnement, qu'un prélèvement de vapeur 27 ait lieu ou non.

Ce second régime de fonctionnement est par ailleurs optionnel et peut être supprimé sans perdre l'essence de l'invention. Dans ce cas, la puissance de chauffage n'est pas annulée lors d'un approvisionnement en liquide 26, mais continue d'être soumise au premier régime de fonctionnement dépendant d'un prélèvement. Cependant, le second régime est préférentiellement combiné au premier, de façon à éviter un échauffement excessif du capteur 11.

Dans d'autres variantes du générateur de vapeur selon l'invention, la température de référence est maintenue dans la plage de transition de température non pas en agissant sur la puissance de chauffage, mais directement sur la température de référence elle-même.

Ainsi, selon une quatrième variante, un capteur auxiliaire thermosensible non chauffé est placé dans le liquide 26, préférentiellement à proximité du fond 22 de la cuve 21, et fournit au circuit électronique 33 un signal dépendant de la température du liquide 26. L'ensemble comprenant la résistance de chauffage 13, la diode 44 et l'interrupteur 45 est remplacé par une simple résistance chauffante. Le circuit électronique 33 est apte à modifier la température de référence comme une fonction croissante de la température du liquide 26. De cette façon, lors d'un prélèvement de vapeur 27, la température de référence décroît en même temps que celle du liquide 26, et s'ajuste continûment à la plage de transition de température.

Dans une cinquième variante particulièrement simple, le dispositif étant semblable à celui de la quatrième variante, le circuit 33 est adapté à mesurer la différence de température entre le capteur de niveau 11 et le capteur auxiliaire thermosensible, et à la comparer à un seuil de température fixé pour commander l'approvisionnement en liquide 26.

On s'affranchit ainsi des variations de pression dans les différents régimes de vapeur, et un unique régime de chauffage suffit à obtenir la fiabilité voulue. Cette cinquième variante est préférentiellement combinée avec le second régime de fonctionnement du capteur 11, le chauffage de la zone 30 étant interrompu lorsque le seuil de température est dépassé.

Les variations de la température de référence peuvent aussi être rendues dépendantes de la pression de la vapeur 27, au lieu de la température du liquide 26.

Il est également possible de combiner les différentes variantes présentées, en jouant par exemple à la fois sur la puissance de chauffage et la température de référence, ou en effectuant simultanément des mesures de température du liquide 26 et de pression du gaz 27. La fiabilité du générateur de vapeur peut ainsi être accrue, mais au détriment de sa simplicité.

Les conditions de mise en oeuvre choisies dans l'exemple peuvent être modifiées sans sortir de l'invention. Ainsi, la pression imposée dans la cuve 21 par le pressostat 6 peut être quelconque en fonction d'une utilisation souhaitée.

Le réservoir 1 n'est soumis à aucun impératif sinon d'être étanche, aussi peut-il être d'une construction très économique.

La cuve 21 du bouilleur 20 peut présenter des formes variées, telles que cylindrique, rectangulaire ou sphérique. Ses dimensions peuvent être sensiblement plus grandes que celles choisies dans l'exemple de réalisation. Elle doit être constituée d'un matériau apte à supporter de fortes pressions et des températures élevées, mais d'autres matériaux que l'acier inoxydable peuvent être appropriés dans certaines applications.

Au lieu de se présenter comme un renfoncement de la paroi latérale 23, le logement 30 peut admettre une forme plus compacte, bien que la forme adoptée soit judicieuse pour le positionnement du capteur 11. Le logement 30 peut aussi être constitué d'un autre matériau que celui de la paroi latérale 23, afin par exemple d'obtenir une meilleure conduction thermique.

D'autres conceptions du logement 30 sont envisageables. Celui-ci peut par exemple être plaqué contre la paroi latérale 23 de la cuve 21, mais cela conduit à des puissances de chauffage excessives. La forme adoptée en doigt de gant permet en revanche de réduire l'échauffement en le localisant mieux.

Le logement 30 peut également être disposé non plus à proximité de la paroi latérale 23, mais vers le centre de la cuve 21, un conduit étant alors prévu pour le passage des fils électriques 32. Dans un mode de réalisation particulier, le logement 30 étant séparé de la paroi latérale 23 peut être déplacé à l'intérieur de la cuve 21. On peut ainsi modifier la position du capteur 11, tant dans sa disposition par rapport aux parois latérales 23, que pour son niveau dans la cuve 21. On dispose de cette façon d'un niveau de seuil ajustable selon les besoins.

La résine 14 placée dans le logement 30 peut être remplacée par toute substance thermiquement conductrice et électriquement isolante. A titre d'exemple, cette substance peut consister en une céramique, ou en de la poudre d'alumine.

Le liquide 26, étant de l'eau dans l'exemple de réalisation, peut être constitué de tout autre corps dont on souhaite obtenir la vapeur. En particulier, il peut s'agir d'un carburant à base d'hydrocarbures.

La commande de prélèvement 15 actionnée manuellement peut être remplacée par un système automatique.

La thermistance 12 à coefficient de température positif (CTP) peut être remplacée par une thermistance à coefficient de température négatif (CTN). De plus, plusieurs thermistances peuvent être employées simultanément.

Le circuit électronique 33 de commande est susceptible d'être remplacé par tout autre dispositif remplissant les mêmes fonctions, tout en restant dans le cadre de l'invention.

Le chauffage de la cuve 21, au lieu d'être effectué au moyen des résistances électriques constituant les éléments chauffants 5, peut être réalisé par des tubes dans lesquels circule un fluide à température élevée. Ce fluide caloporteur peut être un liquide tel que par exemple de l'eau, ou un gaz tel que par exemple du gaz carbonique ou de l'hélium. Les tubes sont typiquement constitués d'aciers ferritiques pour un fluide gazeux ou inoxydables pour un fluide liquide, et disposés préférentiellement à l'intérieur de la cuve 21, vers le fond 22. Le chauffage de la cuve 21 peut également être obtenue par une combustion.

## Revendications

1. Générateur de vapeur à approvisionnement automatique comprenant:
- un bouilleur (20) comportant une cuve (21) destinée à contenir un liquide (16), au moins un élément de chauffage (5) de la cuve (21), capable de vaporiser le liquide (26), des moyens de prélèvement (10, 15, 16) de vapeur (27) dans la cuve (21),
- un dispositif d'approvisionnement (1, 2, 17) de la cuve (21) en liquide (26),
- un capteur de niveau (11) mesurant le niveau du liquide (26) dans la cuve (21), et étant disposé en une zone (30) de la cuve (21) située à un niveau de seuil fixé, ledit capteur (11) comprenant des moyens de chauffage (13), capables de chauffer ladite zone (30) et des moyens de mesure (12) mesurant la température en ladite zone (30) et la comparant à une température de référence, de façon à établir si le liquide (26) atteint le niveau de seuil,
- une commande d'approvisionnement (2) contrôlée par le capteur de niveau (11) et agissant sur le dispositif d'approvisionnement (1, 2, 17), approvisionnant automatiquement la cuve (21) en liquide (26) lorsque le niveau du liquide (26) est inférieur au niveau de seuil et bloquant l'approvisionnement lorsque le niveau du liquide (26) est supérieur ou égal au niveau de seuil,
caractérisé en ce qu'il comporte des moyens d'ajustement (44, 45) agissant en fonction du prélèvement de vapeur (27), d'une plage de variation de la température de ladite zone (30) variant en fonction du niveau du liquide (26) et/ou de la température de référence, de sorte que ladite température de référence soit à l'intérieur de la plage de variation.

2. Générateur de vapeur selon la revendication 1, caractérisé en ce que lesdits moyens d'ajustement (44, 45) comprennent des moyens de commande de la puissance de chauffage dissipée par les moyens de chauffage (13), capables d'augmenter ladite puissance de chauffage lors d'un prélèvement de vapeur (27) et de la diminuer en l'absence d'un tel prélèvement.

3. Générateur de vapeur selon la revendication 2, caractérisé en ce que les moyens de prélèvement (10, 15, 16) de vapeur (27) comprennent une commande de prélèvement (15), les moyens de commande (44, 45) de la puissance de chauffage sont actionnés par la commande de prélèvement (15), et donnent à la puissance de chauffage une première valeur basse ou d'une seconde valeur élevée, selon que la commande de prélèvement (15) est en position de non prélèvement ou de prélèvement.

4. Générateur de vapeur selon la revendication 3, caractérisé en ce que les moyens de chauffage du capteur de niveau (11) comportent au moins une résistance de chauffage (13) et les moyens de commande comprennent:
- une diode (44) à jonction en série avec la résistance de chauffage (13),
- un générateur électrique aux bornes (A, B) de l'ensemble comprenant ladite diode (44) et la résistance de chauffage (13) capable d'alimenter ladite résistance de chauffage (13),
- un interrupteur (45) en parallèle avec la diode (44) actionné par la commande de prélèvement (15), ledit interrupteur (45) étant ouvert en l'absence de prélèvement de vapeur (27) et fermé en présence d'un tel prélèvement, de telle sorte que la valeur élevée est le double de la valeur basse.

5. Générateur de vapeur selon la revendication 2, caractérisé en ce qu'il comporte un capteur de pression (6) apte à mesurer la pression de la vapeur (27) dans la cuve (21) et à transmettre aux moyens de commande de puissance un signal dépendant de ladite pression, lesdits moyens de commande produisant une puissance de chauffage qui est une fonction décroissante de la pression.

6. Générateur de vapeur selon la revendication 2, caractérisé en ce qu'il comporte un capteur auxiliaire de température disposé dans le liquide (26) apte à mesurer la température dudit liquide (26) et à transmettre auxdits moyens de commande de température un signal dépendant de ladite température du liquide (26), lesdits moyens de commande produisant une puissance de chauffage qui est une fonction décroissante de la température du liquide (26).

7. Générateur de vapeur selon la revendication 1, caractérisé en ce que lesdits moyens d'ajustement comprennent des moyens de commande de la température de référence, capables de diminuer ladite température de référence lors d'un prélèvement de vapeur (27) et de l'augmenter en l'absence d'un tel prélèvement.

8. Générateur de vapeur selon la revendication 7, caractérisé en ce qu'il comporte un capteur auxiliaire de température disposé dans le liquide (26) apte à mesurer la température dudit liquide (26) et à transmettre auxdits moyens de commande de température un signal dépendant de ladite température du liquide (26), lesdits moyens de commande produisant une température de référence qui est une fonction croissante de la température du liquide (26).

9. Générateur de vapeur selon la revendication 8, caractérisé en ce que la température de référence est la somme de ladite température du liquide (26) et d'un seuil de température fixe.

10. Générateur de vapeur selon la revendication 7, caractérisé en ce qu'il comporte un capteur de pression (6) apte à mesurer la pression de la vapeur (27) dans la cuve (21) et à transmettre auxdits moyens de commande de température un signal dépendant de ladite pression, lesdits moyens de commande produisant une température de référence qui est une fonction croissante de la température du liquide (26).

11. Générateur de vapeur selon l'une quelconque des revendications précédentes, caractérisé en ce qu'il comporte des moyens de coupure de puissance (33, 46) reliés aux moyens de chauffage (13) du capteur de niveau (11), imposant à ladite puissance de chauffage d'être nulle lors de tout approvisionnement en liquide (26).

12. Générateur de vapeur selon l'une quelconque des revendications précédentes, caractérisé en ce que le bouilleur (20) comporte un logement (30) en doigt de gant à l'intérieur de la cuve (21), fixé au niveau de seuil et prévu pour contenir le capteur de niveau (11).

13. Générateur de vapeur selon la revendication 12, caractérisé en ce que ledit capteur (11) comporte une substance (14) thermiquement conductrice et électriquement isolante, dans laquelle sont immergés les moyens de mesure (12) et les moyens de chauffage (13).

14. Procédé de mesure d'un niveau de liquide (26) dans une cuve (21) d'un générateur de vapeur (27) à approvisionnement automatique, ledit procédé comprenant les étapes suivantes:
- on chauffe à une puissance de chauffage prédéterminée, une zone (30) de la cuve (21) située à un niveau de seuil fixé,
- on mesure la température en ladite zone (30),
- on compare la température mesurée à une température de référence, de façon à établir si le niveau du liquide (26) atteint le niveau de seuil,
- si le niveau du liquide (26) est inférieur au niveau de seuil, on approvisionne la cuve (21) en liquide (26),
- si le niveau du liquide (26) est supérieur ou égal au niveau de seuil, on bloque l'approvisionnement,
caractérisé en ce qu'on ajuste en fonction du prélèvement de vapeur (27), une plage de variation de la température de ladite zone (30) variant en fonction du niveau du liquide (26),
et/ou la température de référence pour que la température de référence soit à l'intérieur de ladite plage de variation.

15. Procédé de mesure selon la revendication 14, caractérisé en ce que lors d'un approvisionnement de la cuve (21) en liquide (26), on interrompt le chauffage de ladite zone (30).

## Patentansprüche

1. Dampferzeuger mit automatischer Versorgung, umfassend:
- einen Verdampfer (20), umfassend eine Wanne (21), die dazu bestimmt ist, eine Flüssigkeit (16) zu enthalten, mindestens ein Heizelement (5) der Wanne (21), das in der Lage ist, die Flüssigkeit (26) zu verdampfen, Mittel (10, 5, 16) zur Entnahme von Dampf (27) aus der Wanne (21),
- eine Vorrichtung (1, 2, 17) zur Versorgung der Wanne (21) mit Flüssigkeit (26),
- einen Füllhöhenmesser (11), der die Flüssigkeitshöhe (26) in der Wanne (21) mißt und der in einem Bereich (30) der Wanne (21) angebracht ist, der sich auf einer festen Schwellenhöhe befindet, wobei der Messer (11) Heizmittel (13), die in der Lage sind, den Bereich (30) zu erhitzen, sowie Messmittel (12) umfasst, die die Temperatur des Bereiches (30) messen und sie mit einer Referenztemperatur vergleichen, um festzustellen, ob die Flüssigkeit (26) die Schwellenhöhe erreicht hat,
- eine Versorgungssteuerung (2), die vom Füllhöhenmesser (11)gesteuert wird und die auf die Versorgungsvorrichtung (1, 2, 17) einwirkt und die Wanne (21) automatisch mit Flüssigkeit (26) versorgt, wenn die Höhe der Flüssigkeit (26) niedriger als die Höhe der Schwelle ist, und die Versorgung unterbricht, wenn die Höhe der Flüssigkeit (26) größer oder gleich der Schwellenhöhe ist,
dadurch gekennzeichnet, dass er Mittel (40, 45) umfasst, die in Abhängigkeit der Entnahme von Dampf (27) einen Veränderungsbereich der Temperatur des Bereiches (30), der sich in Abhängigkeit der Höhe der Flüssigkeit (26) und/oder der Referenztemperatur verändert, so einstellen, dass sich die Referenztemperatur innerhalb des Veränderungsbereichs befindet.

2. Dampferzeuger nach Anspruch 1, dadurch gekennzeichnet, dass die Einstellmittel (40, 45) Mittel zur Steuerung der Heizleistung, die von den Heizmitteln (13) ausgestrahlt wird, umfassen und in der Lage sind, die Heizleistung bei einer Entnahme von Dampf (27) zu erhöhen und sie zu verringern, wenn eine derartige Entnahme nicht stattfindet.

3. Dampferzeuger nach Anspruch 2, dadurch gekennzeichnet, dass die Mittel (10, 15, 16) zur Entnahme von Dampf (27) eine Steuerung (15) der Entnahme umfassen und dass die Mittel (44, 45) zur Steuerung der Heizleistung durch die Steuerung der Entnahme (15) betätigt werden und der Heizleistung einen ersten niedrigen Wert oder einen zweiten erhöhten Wert geben in Abhängigkeit davon, ob die Steuerung der Entnahme (15) sich in der Position der Nichtentnahme oder der Entnahme befindet.

4. Dampferzeuger nach Anspruch 3, dadurch gekennzeichnet, dass die Heizmittel des Füllhöhenmessers mindestens einen Heizwiderstand (13) umfassen und dass die Steuermittel umfassen:
- eine Diode (44) zur Verbindung in Reihe mit dem Heizwiderstand (13),
- einen elektrischen Generator mit Klemmen (A, B) der Gruppe, die die Diode (44) und den Heizwiderstand (13) umfassen, der in der Lage ist, den Heizwiderstand (13) zu versorgen,
- einen Unterbrecher (45), der mit der Diode (44) parallel geschaltet ist, hetätigt durch die Entnahmesteuerung (15), wobei der Unterbrecher (45) bei Nichtentnähme von Dampf (27) offen und bei einer derartigen Entnahme geschlossen ist, so dass der erhöhte Wert das Doppelte des niedrigen Wertes darstellt.

5. Dampferzeuger nach Anspruch 2, dadurch gekennzeichnet, dass er einen Druckmesser (6) umfasst, der in der Lage ist, den Druck des Dampfes (27) in der Wanne (21) zu messen und an die Mittel der Leistungssteuerung ein Signal in Abhängigkeit vom Druck zu geben, wobei die Steuerungsmittel eine Heizleistung erzeugen, die eine abnehmende Funktion des Druckes darstellt.

6. Dampferzeuger nach Anspruch 2, dadurch gekennzeichnet, dass er einen Hilfstemperaturmesser umfasst, der in der Flüssigkeit (26) angebracht und in der Lage ist, die Temperatur der Flüssigkeit (26) zu messen und an die Mittel zur Steuerung der Temperatur ein Signal in Abhängigkeit der Temperatur der Flüssigkeit (26) zu geben, wobei die Steuerungsmittel eine Heizleistung erzeugen, die eine abnehmende Funktion der Temperatur der Flüssigkeit (26) darstellt.

7. Dampferzeuger nach Anspruch 1, dadurch gekennzeichnet, dass die Einstellmittel Mittel zur Steuerung der Referenztemperatur umfassen, die in der Lage sind, die Referenztemperatur bei einer Entnahme von Dampf (27) zu verringern und sie bei Abwesenheit einer derartigen Entnahme zu erhöhen.

8. Dampferzeuger nach Anspruch 7, dadurch gekennzeichnet, dass er einen Hilfstemperaturmesser umfasst, der in der Flüssigkeit (26) angebracht und in der Lage ist, die Temperatur der Flüssigkeit (26) zu messen und an die Mittel zur Steuerung der Temperatur ein Signal in Abhängigkeit der Temperatur der Flüssigkeit (26) zu geben, wobei die Steuerungsmittel eine Referenztemperatur erzeugen, die eine steigende Funktion der Temperatur der Flüssigkeit (26) darstellt.

9. Dampferzeuger nach Anspruch 8, dadurch gekennzeichnet, dass die Referenztemperatur die Summe der Temperatur der Flüssigkeit (26) und einer festen Temperaturschwelle darstellt.

10. Dampferzeuger nach Anspruch 7, dadurch gekennzeichnet, dass er einen Druckmesser (6) umfasst, der in der Lage ist, den Druck des Dampfes (27) in der Wanne (21) zu messen und an die Mittel zur Steuerung der Temperatur ein Signal in Abhängigkeit des Druckes zu geben, wobei die Steuerungsmittel eine Referenztemperatur erzeugen, die eine steigende Funktion der Temperatur der Flüssigkeit (26) darstellt.

11. Dampferzeuger nach irgendeinem der vorhergehenden Ansprüche, dadurch gekennzeichnet, dass er Mittel zur Unterbrechung der Leistung (33, 46) umfasst, die mit den Heizmitteln (13) des Füllhöhenmessers (11) verbunden sind, und die dafür sorgen, dass die Heizleistung bei der vollständigen Versorgung mit Flüssigkeit (25) null ist.

12. Dampferzeuger nach irgendeinem der vorhergehenden Ansprüche, dadurch gekennzeichnet, dass der Verdampfer (20) eine Fingerlagerung (30) im Inneren der Wanne (21) umfasst, die in Schwellenhöhe befestigt und dazu vorgesehen ist, den Füllhöhenmesser (11) zu enthalten.

13. Dampferzeuger nach Anspruch 12, dadurch gekennzeichnet, dass der Messer (11) eine thermisch leitende und elektrisch isolierende Substanz (14) umfasst, in die die Messmittel (12) und die Heizmittel (13) eingetaucht sind.

14. Verfahren zur Messung einer Flüssigkeitshöhe (26) in einer Wanne (21) eines Dampferzeugers (27) mit automatischer Versorgung, wobei das Verfahren die folgenden Schritte umfasst:
- man erwärmt einen Bereich (30) der Wanne (21), der sich auf einer festen Schwellenhöhe befindet, mit einer vorherbestimmten Heizleistung,
- man misst die Temperatur in dem Bereich (30),
- man vergleicht die gemessene Temperatur mit einer Referenztemperatur, so dass festgestellt wird, ob die Höhe der Flüssigkeit (26) die Schwellenhöhe erreicht,
- wenn die Höhe der Flüssigkeit (26) niedriger als die Schwellenhöhe ist, wird die Wanne (21) mit Flüssigkeit (26) versorgt,
- wenn die Höhe der Flüssigkeit (26) höher oder gleich der Schwellenhöhe ist, wird die Versorgung unterbrochen,
dadurch gekennzeichnet, dass in Abhängigkeit von der Entnahme des Dampfes (27) ein Veränderungsbereich der Temperatur des Bereiches (30), der sich in Abhängigkeit von der Höhe der Flüssigkeit (26) verändert,
und/oder die Referenztemperatur eingestellt wird, damit sich die Referenztemperatur innerhalb des Veränderungsbereiches befindet.

15. Verfahren zur Messung nach Anspruch 14, dadurch gekennzeichnet, dass bei einer Versorgung der Wanne (21) mit Flüssigkeit (26) die Erwärmung des Bereiches (30) unterbrochen wird.

## Claims

1. A steam generator with automatic supply comprising :
- a boiler (20) comprising a vessel (21) designed for containing a liquid (26), at least one heating element (5) of the vessel (21), able to vaporize the liquid ((26), means (10, 15, 16) for taking the steam (27) from the vessel (21),
- a device (1, 2, 17) to supply the vessel (21) with liquid (26),
- a level sensor (11) to measure the level of the liquid (26) in the vessel (21) and arranged in a zone (30) of the vessel (21) situated at a set threshold level, whereas the said sensor (11) comprises heating means (13), liable to heat the said zone (30) and measuring means (12) to measure the temperature in the said zone (30) and to compare this reading to a reference temperature, in order to establish whether the liquid (26) has reached the threshold level,
- a supply control (2) actuated by the level sensor (11) and acting on the supply device (1, 2, 17), which delivers liquid (26) automatically to the vessel (21) when the level of liquid (26) is less than the threshold level and blocks the supply when the level of liquid (26) is more than or equal to the threshold level,
characterised in that it comprises adjustment means (44, 45) acting in relation to the taking of steam (27) with a variation temperature range of said zone (30) which varies with respect to the level of liquid (26), and/or the reference temperature, whereas the said reference temperature lies within the variation range.

2. A steam generator according to claim 1, characterised in that the adjustment means (44, 45) comprise means for controlling the heating power dissipated by the heating means (13), capable of increasing the said heating power during the taking of steam (27) and to decrease it in the absence of such taking.

3. A steam generator according to claim 2, characterised in that the means (10, 15, 16) for taking steam (27) comprise a control means (15), whereas the control means (44. 45) of the heating power are actuated by the control means (15) of steam-taking and set the heating power at a first low value or at a second high value, depending on whether the control means (15) are in non-taking or in taking position.

4. A steam generator according to claim 3, characterised in that the heating means of the level sensor (11) comprise at least one heating resistor (13) and the control means comprise :
- a junction diode (44) in series with the heating resistor (13),
- an electric generator at the terminals (A, B) of the assembly comprising the said diode (44) and the heating resistor (13), capable of supplying the said heating resistor (13),
- a switch (45) in parallel with the diode (44), actuated by the control means (15) of steam-taking, whereby the said switch (45) is open in the absence of steam-taking (27) and closed in the presence of such taking, so that the high value corresponds to the double of the low value.

5. A steam generator according to claim 2, characterised in that it comprises a pressure sensor (6) capable of measuring the pressure of the steam (27) in the vessel (21) and of transmitting to the power control means a signal depending on the said pressure, whereas the said control means produce a heating power in decreasing function of the pressure.

6. A steam generator according to claim 2, characterised in that it comprises an auxiliary temperature sensor placed in the liquid (26) capable of measuring the temperature of the said liquid (26) and of transmitting to the said temperature control means a signal depending on the said temperature of the liquid (26), whereas the said control means produce a heating power in decreasing function of the temperature of the liquid (26).

7. A steam generator according to claim 1, characterised in that the adjustment means comprise means for controlling the reference temperature, capable of reducing the said reference temperature during steam-taking (27) and of increasing it in the absence of such taking.

8. A steam generator according to claim 7, characterised in that it comprises an auxiliary temperature sensor placed in the liquid (26) capable of measuring the temperature of the said liquid (26) and of transmitting to the said temperature control means a signal depending on the said temperature of the liquid (26), whereas the said control means produce a reference temperature in increasing function of the temperature of the liquid (26).

9. A steam generator according to claim 8, characterised in that the reference temperature is the sum of the said temperature of the liquid (26) and of a set temperature threshold.

10. A steam generator according to claim 7, characterised in that it comprises a pressure sensor (6) capable of measuring the pressure of the steam (27) in the vessel (21) and of transmitting to the temperature control means a signal depending on the said pressure, whereas the said control means produce a reference temperature in increasing function of the temperature of the liquid (26).

11. A steam generator according to any one of the previous claims, characterised in that it comprises power cut-off means (33, 46) linked to the heating means (13) of the level sensor (11), causing the said heating power to be nil during any supply of liquid (26).

12. A steam generator according to any one of the previous claims, characterised in that the boiler (20) comprises a housing in the form of a glove finger inside the vessel (21), fixed at the threshold level and designed for containing the level sensor (11).

13. A steam generator according to claim 12, characterised in that the said sensor (11) comprises a thermally conducting and electrically insulating substance (14), in which the measuring (12) as well as the heating (13) means are immersed.

14. A process for measuring a level of liquid (26) in the vessel (21) of the steam generator (27) with automatic supply, whereas the said process comprises the following steps :
- a zone (30) of the vessel (21) located at a set threshold level is heated to a predetermined heating power,
- the temperature is measured in said zone (30),
- the temperature mesured is compared to a reference temperature, in order to establish whether the level of liquid (26) reaches the threshold level,
- if the level of liquid (26) is less than the threshold level, the vessel (21) is supplied with liquid (26),
- if the level of liquid (26) is more than or equal to the threshold level, the supply is blocked,
characterised in that a temperature variation range of the said zone (30) varying in relation to the level of liquid (26) is adjusted in relation to steam-taking (27), and/or the reference temperature so that the reference temperature remains within the said variation range.

15. A measuring process acoording to claim 14, characterised in that, when supplying the vessel (21) with liquid (26), the heating of the said zone (30) is switched off.
